# EUROPEAN PATENT SPECIFICATION

(11) **EP 2 749 173 B1**
(45) Date of publication and mention of the grant of the patent: **18.09.2019**
(21) Application number: 12825399.4
(22) Date of filing: 21.08.2012
(51) Int. Cl.: A23D 7/005, A23D 7/04, A23D 7/01

(54) **OIL/FAT COMPOSITION**
ÖL-/FETT-ZUSAMMENSETZUNG
COMPOSITION D'HUILE/GRAISSE

(30) Priority: 22.08.2011 JP 2011180784
(43) Date of publication of application: 02.07.2014
(73) Proprietor: Kao Corporation, Chuo-ku Tokyo 103-8210 (JP)
(72) Inventor: HOMMA, Rika, Tokyo 131-8501 (JP); ASABU, Yoshihide, Tokyo 131-8501 (JP)
(74) Representative: Hoffmann Eitle
(86) International application number: PCT/JP2012/071086
(87) International publication number: WO 2013/027728

(56) References cited:
- WO-A1-95/22256
- WO-A1-95/29596
- WO-A1-99/59422
- WO-A1-2005/104863
- WO-A1-2005/104865
- WO-A1-2007/007907

## Description

### Field of the Invention

The present invention relates to a method for preparing butter cream by adding sugar to a water-in-oil emulsion of a fat or oil composition and foaming the resulting mixture.

### Background of the Invention

Butter cream is a water-in-oil emulsion obtained by adding a sugar or the like to butter, shortening, margarine, or the like, and foaming the resulting mixture. The butter cream includes a fat or oil in an outer phase, and hence has characteristics such as high resistance to proliferation of microorganisms, excellent shape-retaining property, and a long shelf life, and is widely used for topping, filling, or sandwiching in confectionery production, bread production, or the like. However, on the other hand, the butter cream has a disadvantage of being poor in melt-in-the-mouth feeling because of its high solid fat content. When the solid fat content in the fat or oil is reduced to overcome the disadvantage, the fat or oil becomes softer and is liable to cause problems in preservation stability such as deterioration of external appearance due to crystallization during preservation.

There have been reported, as technologies for overcoming the disadvantages, for example, a method involving a specific emulsifier (Patent Document 1), a water-in-oil emulsified fat or oil composition obtained by mixing and emulsifying an oil phase containing a diglyceride having a melting point (softening point) of less than 20°C and an aqueous phase (Patent Document 2), and a water-in-oil emulsified fat or oil composition including an oil phase and an aqueous phase, in which the oil phase has composition including a diglyceride and a triglyceride, and the diglyceride has composition satisfying a certain condition (Patent Document 3). In addition, use of palm oil or the like having plasticity without curing has been proposed.

### Citation List

### Patent Document

[Patent Document 1] JP-A-2001-178361
[Patent Document 2] JP-A-63-301743
[Patent Document 3] JP-A-11-243855

WO 99/59422 relates to a W/0 emulsified fat composition having an oily phase and an aqueous phase, wherein the oily phase contains 40 to less than 95 %wt.% of diglycerides and 5 to less than 60 wt.% of triglycerides and satisfies the requirements (1) and (2): (1) the diglycerides have 0.5 to less than 20 wt.% of SS components, 20 to less than 55 wt.% of SU components, and 25 to less than 70 wt.% of UU components (wherein S is a C₁₄₋₂₂ saturated fatty acid group and U is a C₁₄₋₂₂ unsaturated fatty acid group), and (2) the weight ratio of the C₁₄ and C₁₆ saturated fatty acid groups contained in the diglycerides to the C₁₈, C₂₀, and C₂₂ saturated fatty acid groups contained in the diglycerides is 10 to 80.

WO95/22256 discloses fat blends showing a diglyceride content of 30-70wt %, from which 25-70wt% (preferably 25-45wt%) are SU diglycerides, 10-70wt% are (preferably 40-70wt%) UU diglycerides and less than 30wt% (preferably less than 20wt % or 10wt%) SS-digiycerides. The present invention is a method for preparing butter cream by adding sugar to a water-in-oil emulsion of a fat or oil composition and foaming the resulting mixture, wherein the fat or oil composition comprises 50 mass% or more of diacylglycerols and satisfies the following (1) to **(4):**
(1) **10** to 40 mass% of a disaturated diacylglycerol (SS) in the diacylglycerols;
(2) 21 to **45** mass% of a monosaturated-monounsaturated diacylglycerol (SU) in the diacylglycerols;
(3) 0.5 to 3.8 as the ratio (mass ratio) [(SU)/(SS)] of the content of the monosaturated-monounsaturated diacylglycerol (SU) in the diacylglycerols relative to the content of a disaturated diacylglycerol (SS) in the diacylglycerols; and
(4) 9.7 or less as the mass ratio [(P)/(S)] of the content of a saturated fatty acid having 16 carbon atoms (P) relative to the content of a saturated fatty acid having 18 carbon atoms (S), in constituent fatty acids of the diacylglycerols.

The water-in-oil emulsion, comprising the fat or oil composition, preferably has a mass ratio between an oil phase and an aqueous phase of from 10:90 to 90:10.

### Detailed Description of the Invention

Conventional fats or oils including diacylglycerols were found to have insufficient foaming property and sugar absorbing property. In addition, palm oil or the like has low foaming property and is poor in melt-in-the-mouth feeling in some cases.

Therefore, the present invention relates to a method using a fat or oil composition that is excellent in foaming property, sugar absorbing property, and the like, can be used as a raw material fat or oil for butter cream, and has a high content of diacylglycerol.

The inventors of the present invention made intensive studies to search a fat or oil suited for butter cream with focusing attention on the ratio of a diacylglycerol having a specific structure in diacylglycerols, and as a result, found that it is possible to produce a fat or oil composition that is excellent in foaming property, sugar absorbing property, and melt-in-the-mouth feeling, hardly causes deterioration of external appearance due to crystallization during preservation, and has satisfactory performance as a raw material fat or oil for a water-in-oil emulsion such as butter cream, when it contains a specific amount of a diacylglycerol including only a saturated fatty acid and a specific amount of a diacylglycerol including a saturated fatty acid and an unsaturated fatty acid, respectively, and the ratio of a specific fatty acid in the diacylglycerols is adjusted within a predermined range.

According to the present invention, it is possible to produce a fat or oil composition that is excellent in foaming property and sugar absorbing property, hardly causes deterioration of external appearance due to crystallization during preservation, has satisfactory emulsion stability, can be used for producing butter cream excellent in melt-in-the-mouth feeling, and has a high content of diacylglycerol.

The fat or oil composition used in the method of the present invention contains 50 mass% (hereinafter referred to as "%") or more of the diacylglycerols, from the viewpoints of physiological effects and satisfactory emulsion stability. The content of the diacylglycerols is preferably 55% or more, more preferably 65% or more, more preferably 70% or more, more preferably 75% or more, even more preferably 80% or more, and is preferably 95% or less, more preferably 90% or less, even more preferably 85% or less. Specifically, the content is preferably from 55 to 95%, more preferably from 65 to 95%, more preferably from 70 to 95%, more preferably from 75 to 95%, more preferably from 80 to 90%, even more preferably from 80 to 85%. It should be noted that, in the present invention, the "fat or oil" contains any one or more of triacylglycerols, diacylglycerols, and monoacylglycerols.

The diacylglycerols used in the method of the present invention satisfy the following (1) to (4):
(1) 10 to 40 mass% of a disaturated diacylglycerol (SS) in the diacylglycerols;
(2) 21 to 45 mass% of a monosaturated-monounsaturated diacylglycerol (SU) in the diacylglycerols;
(3) 0.5 to 3.8 as the ratio (mass ratio) [(SU) / (SS)] of the content of the monosaturated-monounsaturated diacylglycerol (SU) in the diacylglycerols relative to the content of a disaturated diacylglycerol (SS) in the diacylglycerols; and
(4) 9.7 or less as the mass ratio [(P) / (S)] of the content of a saturated fatty acid having 16 carbon atoms (P) relative to the content of a saturated fatty acid having 18 carbon atoms (S), in constituent fatty acids of the diacylglycerols.

In the diacylglycerols, the content of the disaturated diacylglycerol (SS), whose constituent fatty acids include two saturated fatty acids, is from 10 to 40%, preferably 12% or more, even more preferably 15% or more, and is preferably 36% or less, more preferably 33% or less, more preferably 30% or less, more preferably 25% or less, even more preferably 20% or less. Specifically, the content is preferably from 4 to 36%, more preferably from 5 to 33%, more preferably from 5 to 30%, more preferably from 5 to 25%, more preferably from 8 to 25%, more preferably from 10 to 25%, more preferably from 12 to 20%, even more preferably from 15 to 20%. The content of SS that falls within the above-mentioned range is preferred from the viewpoints of satisfactory external appearance and sugar absorbing property. The saturated fatty acids each have preferably from 14 to 24 carbon atoms, more preferably from 16 to 22 carbon atoms.

In the diacylglycerols, the content of the monosaturated-monounsaturated diacylglycerol (SU), whose constituent fatty acids include a saturated fatty acid and an unsaturated fatty acid, is from 21 to 45%, preferably 25% or more, more preferably 27% or more, even more preferably 28% or more, and is preferably 43% or less, even more preferably 37% or less. Specifically, the content is preferably from 25 to 45%, more preferably from 25 to 43%, more preferably from 27 to 43%, even more preferably from 28 to 37%. The content of SU that falls within the above-mentioned range is preferred from the viewpoint of satisfactory sugar absorbing property. The unsaturated fatty acid has preferably from 14 to 24 carbon atoms, more preferably from 16 to 22 carbon atoms, from the viewpoint of physiological effects.

Further, in the diacylglycerols, the content of the diunsaturated diacylglycerol (UU), whose constituent fatty acids include two unsaturated fatty acids, is not particularly limited, but is preferably 20% or more, more preferably 25% or more, more preferably 30% or more, more preferably 35% or more, even more preferably 45% or more, and is preferably 65% or less, more preferably 60% or less, even more preferably 55%. Specifically, the content is preferably from 25 to 65%, more preferably from 30 to 60%, more preferably from 35 to 55%, even more preferably from 45 to 55%. The content of UU that falls within the above-mentioned range is preferred from the viewpoint of physiological effects.

The positions of the saturated fatty acid(s) and/or the unsaturated fatty acid (s) constituting each of the diacylglycerols may be the 1-position and 3-position of glycerol, or may be the 1-position and 2-position of glycerol.

In the diacylglycerols, the mass ratio [(SU) / (SS)] of the content of the monosaturated-monounsaturated diacylglycerol (SU) relative to the content of the disaturated diacylglycerol (SS) is from 0.5 to 3.8, preferably 0.8 or more, more preferably 1 or more, more preferably 1.2 or more, even more preferably 1.5 or more, and is preferably 3.7 or less, more preferably 3.6 or less, more preferably 3.5 or less, more preferably 3.4 or less, more preferably 3 or less, more preferably 2.8 or less, even more preferably 2.3 or less. Specifically, the ratio is preferably from 0.8 to 3.7, more preferably from 1 to 3.6, more preferably from 1.2 to 3.5, more preferably from 1.5 to 3.4, more preferably from 1.5 to 2.8, even more preferably from 1.5 to 2. 3. The ratio (SU) / (SS) that falls within the above-mentioned range is preferred from the viewpoint of satisfactory foaming property.

In addition, the mass ratio [(P)/(S)] of the content of the saturated fatty acid having 16 carbon atoms (P) relative to the content of the saturated fatty acid having 18 carbon atoms (S), in the constituent fatty acids of the diacylglycerols according to the present invention is 9.7 or less, preferably 9.65 or less, more preferably 9 or less, more preferably 8. 5 or less, more preferably 8 or less, more preferably 5 or less, even more preferably 2 or less. In addition, the lower limit of the ratio P/S is preferably 0.15 or more, more preferably 0.16 or more, even more preferably 0.17 or more. Specifically, the ratio is preferably from 0.15 to 9.65, more preferably from 0.155 to 9, more preferably from 0.16 to 8.5, more preferably from 0.16 to 8, more preferably from 0.17 to 3, even more preferably from 0.17 to 2. The ratio P/S that falls within the above-mentioned range is preferred from the viewpoint of a satisfactory melt-in-the-mouth feeling.

The fat or oil composition used in the method of the present invention preferably contains the triacylglycerols, and the content of the triacylglycerols is preferably 1% or more, more preferably 5% or more, and is preferably 49% or less, more preferably 40% or less, more preferably 39.5% or less, more preferably 35% or less, more preferably 30% or less, more preferably 25% or less, even more preferably 20% or less. Specifically, the content is preferably from 1 to 49%, more preferably from 5 to 40%, more preferably from 5 to 35%, more preferably from 5 to 30%, more preferably from 5 to 25%, even more preferably from 5 to 20%, from the viewpoint of industrial productivity.

In addition, in the fat or oil composition, the content of monoacylglycerols is preferably 10% or less, more preferably from 0.01 to 8%, and the content of free fatty acids (salts) is preferably 3.5% or less, more preferably from 0.01 to 1.5%, from the viewpoint of a taste and flavor or the like. The constituent fatty acids of the triacylglycerols and the monoacylglycerols are preferably the same as the constituent fatty acids of the diacylglycerols, from the viewpoints of physiological effects and the industrial productivity of the fat or oil.

The fat or oil composition used in the method of the present invention can be produced by, for example, separately preparing a fat or oil containing a high concentration of the disaturated diacylglycerol (SS), which includes only the saturated fatty acids, and a fat or oil containing a high concentration of the diunsaturated diacylglycerol (UU), which includes only the unsaturated fatty acids, or the like, and then blending the fats or oils so that the diacylglycerols have the above-mentioned specific composition. Further, if necessary, a usual edible fat or oil may be blended.

The edible fat or oil may be any of a plant-derived fat or oil and an animal-derived fat or oil. A specific raw material therefor may be exemplified by: plant-derived fats or oils such as soybean oil, rapeseed oil, safflower oil, rice oil, corn oil, sunflower oil, cotton seed oil, olive oil, sesame oil, peanut oil, Job's tears seed oil, wheat germ oil, Japanese basil oil, linseed oil, perilla oil, sacha inchi oil, walnut oil, kiwi seed oil, salvia seed oil, grape seed oil, macadamia nut oil, hazelnut oil, pumpkin seed oil, camellia oil, tea seed oil, borage oil, palm oil, palm olein, palm stearin, coconut oil, palm kernel oil, cacao butter, sal butter, shea butter, and algae oil; and animal-derived fats or oils such as fish oil, lard, beef tallow, and butter fat. In addition, fats or oils such as transesterified oils, hydrogenated oils, and fractionated oils thereof may be used. In the case of using the hydrogenated oil, a fully hardened oil is preferably used because a content of a trans unsaturated fatty acid in the total fatty acids constituting the fat or oil is decreased. The oils may be used singly or may be mixed appropriately before use. Of those, from the viewpoint of usability, a plant-derived fat or oil is preferably used.

A diacylglycerol-containing fat or oil can be obtained through an esterification reaction of a fatty acid and glycerin, a glycerolysis reaction of a fat or oil and glycerin, or the like. From the viewpoint of controlling the fatty acid composition, it is preferably obtained by an esterification reaction of a raw material fat or oil-derived fatty acid and glycerin.

The esterification reaction and/or the glycerolysis reaction are roughly classified into chemical methods using a chemical catalyst such as an alkali metal or an alloy thereof, or an oxide, hydroxide, or alkoxide having from 1 to 3 carbon atoms of an alkali metal or an alkali earth metal, and enzymatic methods using an enzyme such as a lipase. In particular, the reactions are preferably carried out under enzymatically mild conditions by using a lipase or the like as the catalyst, from the viewpoint of an excellent taste and flavor or the like.

After the esterification reaction and/or the glycerolysis reaction, a purification step usually employed for the fat or oil may be carried out. Specific examples thereof include steps of acid treatment, water washing, decoloration, and deodorization.

The raw material fat or oil for the fatty acid used in the esterification reaction and the raw material fat or oil used in the glycerolysis reaction may be the fats or oils listed above as the edible fats or oils.

The fat or oil composition used in the method of the present invention preferably contains an antioxidant. The content of the antioxidant in the fat or oil composition is preferably from 0.005 to 0.5%, more preferably from 0.04 to 0.25%, even more preferably from 0.08 to 0.2%, from the viewpoints of, for example, a taste and flavor, oxidation stability, and suppression of coloration. Any antioxidant that is usually used in a food may be used as the antioxidant. It is possible to use, for example, vitamin E, butylhydroxytoluene (BHT), butylhydroxyanisole (BHA), t-butylhydroquinone (TBHQ), vitamin C or derivatives thereof, phospholipids, and natural antioxidants such as a rosemary extract.

The fat or oil composition according to the present invention can be used for a water-in-oil emulsion. A mass ratio between an aqueous phase and an oil phase is not particularly limited, but is preferably "oil phase:aqueous phase"=from 10:90 to 90:10, more preferably "oil phase: aqueous phase"=from 20:80 to 80:20, even more preferably "oil phase:aqueous phase"=from 30:70 to 70:30.

In the case where the fat or oil composition is formed into an emulsion, a component usually used for an emulsion, such as an emulsifier, an antioxidant, a stabilizer, a thickener, a gelling agent, or a surfactant, may be appropriately blended. Further, another fat or oil may be blended in the oil phase in addition to the fat or oil composition according to the present invention. Examples of another fat or oil may include usual animal- and plant-derived edible fats or oils as mentioned above, and processed fats or oils.

The fat or oil composition used in the method of the present invention is in a solid state at normal temperature (20°C) and can be applied as an edible fat or oil to a variety of foods and beverages . In particular, the fat or oil composition is suited for a raw material fat or oil for butter cream used for topping, filling, sandwiching or the like in confectionery production, bread production, or the like because the composition is excellent in foaming property and sugar absorbing property, hardly causes deterioration of external appearance due to crystallization during preservation, and is satisfactory in emulsion stability and melt-in-the-mouth feeling.

### Examples

### (Analysis method)

### (i) Composition of glycerides in fat or oil

About 10 mg of a fat or oil sample and 0.5 mL of a trimethylsilylating agent ("Silylating agent TH," manufactured by Kanto Chemical Co., Inc.) were placed in a glass sample bottle, and the bottle was sealed and heated at 70°C for 15 minutes. 1.0 mL of water and 1.5 mL of hexane were added thereto, and the bottle was shaken. The bottle was allowed to stand still, and then the upper layer was analyzed by gas-liquid chromatography (GLC).

### <GLC conditions>

### (Conditions 1)

Apparatus: Agilent 6890 Series (manufactured by Agilent Technologies)
Integrator: ChemStation B 02.01 SR2 (manufactured by Agilent Technologies)
Column: DB-1ht (manufactured by Agilent J&W)
Carrier gas: 1.0 mL He/min
Injector: Split (1:50), T=320°C
Detector: FID, T=350°C
Oven temperature: increased from 80°C to 340°C at 10°C/min, and kept for 15 minutes
It should be noted that the contents of SS, SU, and UU in the diacylglycerols were determined under Conditions 2.

### (Conditions 2)

Apparatus: Agilent 6890 Series (manufactured by Agilent Technologies)
Integrator: ChemStation B 02.01 SR2 (manufactured by Agilent Technologies)
Column: CP, TAP for Triglyceride (manufactured by VARIAN)
Carrier gas: 1.7 mL He/min
Injector: Split (1:50), T=345°C
Detector: FID, T=355°C
Oven temperature: kept at 220°C for 12 minutes, increased to 305 °C at 10 °C/min, kept for 15 minutes, increased to 355 °C at 10 °C/min, and kept for 30 minutes

### (ii) Composition of constituent fatty acids in fat or oil

Fatty acid methyl esters were prepared in accordance with "Preparation method for fatty acid methyl ester (2.4.1.-1996)" described in "Standard Method for Analysis of Fats and Oils" edited by Japan Oil Chemists' Society, and the resultant fat or oil samples were subjected to measurement according to American Oil Chemists. Society Official Method Ce 1f-96 (GLC method).

### (Preparation of fats or oils A to I)

### (1) Fat or oil A

100 parts by mass of soybean extremely hardened oil (Yokozeki Oil & Fat Industries Co., Ltd.) and 40 parts by mass of glycerin were mixed, and the mixture was subjected to a glycerolysis reaction using sodium methylate as a catalyst, thereby obtaining a diacylglycerol (DAG)-containing fat or oil. Fatty acids and monoacylglycerols were removed from the resultant glycerolysis reaction product by distillation, and the resultant was treated with an acid (an 10% aqueous solution of citric acid was added at a concentration of 2% by mass relative to the resultant), washed with water (distilled water five times), and brought into contact with activated clay (GALLEON EARTH V2R, MIZUSAWA INDUSTRIAL CHEMICALS, LTD.), thereby obtaining a decolored oil. Further, the oil was brought into contact with water vapor to deodorize the oil, thereby obtaining a fat or oil A (DAG: 74%).

### (2) Fats or oils B to D

100 parts by mass of a mixed fatty acid of soybean oil fatty acid: rapeseed oil fatty acid=7:3 (mass ratio) and 15 parts by mass of glycerin were mixed, and subjected to an esterification reaction with an enzyme, thereby obtaining a DAG-containing fat or oil. Fatty acids and monoacylglycerols were removed from the resultant esterification product by distillation, and the resultant was treated in the same manner as the fat or oil A, thereby obtaining a fat or oil B (DAG: 86%).

In the same manner as the fat or oil B, 100 parts by mass of palm oil fatty acid and 15 parts by mass of glycerin were used to obtain a fat or oil C (DAG: 80%). Further, hydrogenated rapeseed oil (melting point: 31.5°C) and 15 parts by mass of glycerin were used to obtain a fat or oil D (DAG: 88%).

### (3) Fats or oils E to H

In the same manner as the fat or oil A, 65 parts by mass of soybean extremely hardened oil, 35 parts by mass of rapeseed oil, and 40 parts by mass of glycerin were used to prepare a fat or oil E (DAG: 80%) ; 50 parts by mass of soybean extremely hardened oil, 50 parts by mass of rapeseed oil, and 40 parts by mass of glycerin were used to obtain a fat or oil F (DAG: 80%) ; and 25 parts by mass of soybean extremely hardened oil, 75 parts by mass of rapeseed oil, and 40 parts by mass of glycerin were used to obtain a fat or oil G (DAG: 80%). Further, LUNAC P-95 (Kao Corporation) and 15 parts by mass of glycerin were used to obtain a fat or oil H(DAG: 83%).

Table 1 shows analyzed values for the fats or oils A to H.

### (5) Fat or oil I

A fat or oil having the composition shown in Table 1 (blended oil (SUMMIT OIL MILL CO., LTD.)) was used as a fat or oil I.

**[Table 1]**

| | Fatty acid composition (%) | | | | | | Glyceride composition (%) | | | | |
|---|---|---|---|---|---|---|---|---|---|---|---|
| | | | | | | | DAG | | | MAG | TAG |
| | C14:0 | C16:0 | C18:0 | C18:1 | C18:2 | C18:3 | SS | SU | UU | | |
| Fat or oil A | | 9.7 | 87.8 | | | | 74.0 | | | 9.1 | 16.9 |
| Fat or oil B | | 3.0 | 1.2 | 38.7 | 47.6 | 8.3 | | 14.8 | 71.2 | 0.5 | 13.5 |
| Fat or oil C | 1.0 | 43.3 | 4.4 | 40.4 | 10.4 | | 20.0 | 40.0 | 20.0 | 0.6 | 19.4 |
| Fat or oil D | | 3.8 | 12.0 | 78.7 | 0.2 | | 3.0 | 27.0 | 58.0 | 1.0 | 11.0 |
| Fat or oil E | | 7.7 | 57.7 | 20.9 | 7. 4 | 4.2 | 35.7 | 35.5 | 8.8 | 1.1 | 18.8 |
| Fat or oil F | | 6.9 | 44.8 | 29.9 | 10.6 | 6.0 | 22.2 | 39.9 | 17.9 | 1.0 | 19.0 |
| Fat or oil G | | 34.9 | 25.3 | 30.3 | 7.8 | 0.0 | 30.0 | 38.0 | 12.0 | 2.0 | 18.0 |
| Fat or oil H | | 97.1 | 2.9 | | | | 82.7 | | | 0.8 | 16.5 |
| Fat or oil I | | 4.0 | 1.8 | 59.8 | 21.1 | 12.0 | | | | | 100.0 |

| | | | | | | | | | | | |
|---|---|---|---|---|---|---|---|---|---|---|---|
| MAG: Monoacylglycerol DAG: Diacylglycerol TAG: Triacylglycerol | | | | | | | | | | | |

### Examples 1 to 17 and Comparative Examples 1 to 11

### (1) Preparation of fat or oil compositions

The fats or oils A to I were mixed at the ratios shown in Table 2, and melted at 80 °C to prepare homogeneous mixtures. The mixtures were cooled to 25°C while being kneaded using a chiller (emulsifying kneader, Tama Seiki Kogyo Co., Ltd.), thereby obtaining fat or oil compositions. The resultant fat or oil compositions were preserved at 5°C for 1 day, successively preserved at 20°C for 1 day, and then preserved in a refrigerator (5°C), thereby obtaining fat or oil samples . The fat or oil samples were evaluated for their external appearance, foaming property, and sugar absorbing property.

### (External appearance)

The fat or oil samples were preserved at 5°C for 3 months, visually observed, and evaluated for their external appearance during preservation in accordance with the following criteria.
4: Very smooth and glossy surface
3: Smooth surface
2: Slightly rough surface
1: Rough and coarse surface

### (Foaming property test)

200 g of each of the fat or oil samples were stirred with a Hobart mixer (model N-50: manufactured by Hobart Corporation) at a middle speed for 20 minutes to foam the mixture . After the foaming, the volume per g of the fat or oil sample (specific volume: ml/g) was measured to evaluate the foaming property.
4: Specific volume of 3 or more
3: Specific volume of 2.7 or more and less than 3
2: Specific volume of 2.5 or more and less than 2.7
1: Specific volume of less than 2.5

### (Sugar absorbing property test)

After the foaming, 100 g of the fat or oil sample were stirred with the Hobart mixer while a sugar solution having a sugar concentration of 70% was gradually added thereto, followed by determination of the added amount (g) of the sugar solution immediately before separation from the sugar solution. The amount of a sugar absorbed was determined by the following equation to evaluate the sugar absorbing property.
Amount of sugar absorbed= Added amount of sugar solution (g) /amount of fat or oil sample (g)
4: Amount of sugar absorbed of 20 or more
3: Amount of sugar absorbed of 17 or more and less than 20
2: Amount of sugar absorbed of 14 or more and less than 17
1: Amount of sugar absorbed of less than 14

### (2) Preparation of water-in-oil emulsion

80 parts by mass of each of the fat or oil compositions prepared in (1) above were melted at 80 °C to prepare a homogeneous mixture. The mixture was subjected to stirring emulsification (7,000 rpm, 10 minutes) with a homomixer (manufactured by PRIMIX Corporation) while 20 parts by mass of water heated to 60°C were gradually added to the oil phase component, thereby obtaining a water-in-oil emulsion. The resultant emulsion was cooled to 25°C while being kneaded using a chiller (emulsifying kneader, Tama Seiki Kogyo Co., Ltd.), thereby obtaining margarine. The resultant margarine was preserved at 5°C for 1 day, successively preserved at 20°C for 1 day, then preserved in a refrigerator (5°C), and evaluated for its emulsion stability (water separation state of the margarine) in accordance with the following criteria. In addition, five panelists ate 10 g of the sample, and evaluated the melt-in-the-mouth feeling in accordance with the following criteria shown below, and the average values were calculated as scores. Table 2 shows the results.

### (Emulsion stability)

4: Very satisfactory emulsion stability without separation of water from emulsion
3: Satisfactory emulsified state even with separation of a small amount of water from emulsion
2: Satisfactory emulsified state even with separation of small amounts of water and oil from emulsion
1: Poor emulsified state with separation of water and oil (Melt-in-the-mouth feeling)
4: Very smooth and satisfactory melt-in-the-mouth feeling
3: Smooth and satisfactory melt-in-the-mouth feeling
2: Slightly rough but satisfactory melt-in-the-mouth feeling
1: Rough and poor melt-in-the-mouth feeling

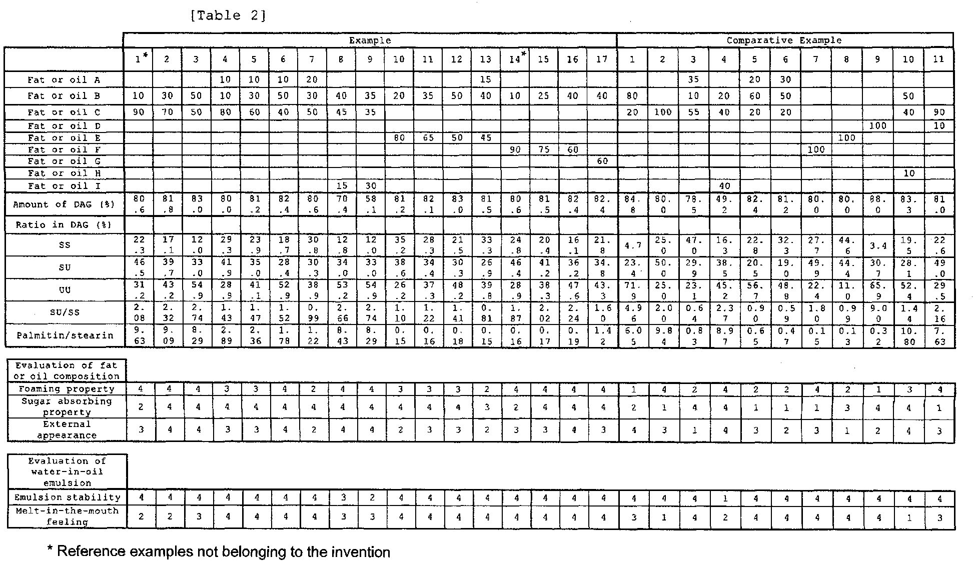

As apparent from Table 2, it found that the fat or oil compositions according to the present invention have satisfactory foaming property and sugar absorbing property, and hardly cause deterioration of external appearance due to crystallization during preservation, as compared to those of Comparative Examples. In addition, the margarine including the fat or oil composition according to the present invention was excellent in emulsion stability and melt-in-the-mouth feeling.

## Claims

1. Method for preparing butter cream by adding sugar to a water-in-oil emulsion of a fat or oil composition and foaming the resulting mixture,
wherein the fat or oil composition comprises 50 mass% or more of diacylglycerols satisfying the following (1) to (4):
(1) 10 to 40 mass% of a disaturated diacylglycerol (SS) in the diacylglycerols;
(2) 21 to 45 mass% of a monosaturated-monounsaturated diacylglycerol (SU) in the diacylglycerols;
(3) 0.5 to 3.8 as a ratio (mass ratio) [(SU) / (SS)] of a content of the monosaturated-monounsaturated diacylglycerol (SU) in the diacylglycerols relative to a content of the disaturated diacylglycerol (SS) in the diacylglycerols; and
(4) 9.7 or less as a mass ratio [(P) / (S)] of a content of a saturated fatty acid having 16 carbon atoms (P) relative to a content of a saturated fatty acid having 18 carbon atoms (S), in constituent fatty acids of the diacylglycerols.

2. The method according to claim 1, wherein the diacylglycerols satisfy the following (1) to (4):
(1) 10 mass% or more and 36 mass% or less of a disaturated diacylglycerol (SS) in the diacylglycerols;
(2) 21 mass% or more and 45 mass% or less of a monosaturated-monounsaturated diacylglycerol (SU) in the diacylglycerols;
(3) 0.8 or more and 3.7 or less as a ratio (mass ratio) [(SU) / (SS)] of a content of the monosaturated-monounsaturated diacylglycerol (SU) in the diacylglycerols relative to a content of the disaturated diacylglycerol (SS) in the diacylglycerols; and
(4) 0.15 or more and 9.65 or less as a mass ratio [(P) / (S)] of a content of a saturated fatty acid having 16 carbon atoms (P) relative to a content of a saturated fatty acid having 18 carbon atoms (S), in constituent fatty acids of the diacylglycerols.

3. The method according to claim 1, wherein the diacylglycerols satisfy the following (1) to (4):
(1) 10 mass% or more and 25 mass% or less of a disaturated diacylglycerol (SS) in the diacylglycerols;
(2) 25 mass% or more and 45 mass% or less of a monosaturated-monounsaturated diacylglycerol (SU) in the diacylglycerols;
(3) 1.2 or more and 3.5 or less as a ratio (mass ratio) [(SU) / (SS)] of a content of the monosaturated-monounsaturated diacylglycerol (SU) in the diacylglycerols relative to a content of the disaturated diacylglycerol (SS) in the diacylglycerols; and
(4) 0.16 or more and 8.5 or less as a mass ratio [(P) / (S)] of a content of a saturated fatty acid having 16 carbon atoms (P) relative to a content of a saturated fatty acid having 18 carbon atoms (S), in constituent fatty acids of the diacylglycerols.

4. The method according to claim 1, wherein the diacylglycerols satisfy the following (1) to (4):
(1) 10 mass% or more and 25 mass% or less of the disaturated diacylglycerol (SS) in the diacylglycerols;
(2) 25 mass% or more and 43 mass% or less of the monosaturated-monounsaturated diacylglycerol (SU) in the diacylglycerols;
(3) 1.5 or more and 3.4 or less as the ratio (mass ratio) [(SU) / (SS)] of the content of the monosaturated-monounsaturated diacylglycerol (SU) in the diacylglycerols relative to the content of the disaturated diacylglycerol (SS) in the diacylglycerols; and
(4) 0.16 or more and 8 or less as the mass ratio [(P) / (S)] of the content of the saturated fatty acid having 16 carbon atoms (P) relative to the content of the saturated fatty acid having 18 carbon atoms (S), in the constituent fatty acids of the diacylglycerols.

5. The method according to claim 1, wherein the diacylglycerols satisfy the following (1) to (4):
(1) 15 mass% or more and 20 mass% or less of the disaturated diacylglycerol (SS) in the diacylglycerols;
(2) 27 mass% or more and 43 mass% or less of the monosaturated-monounsaturated diacylglycerol (SU) in the diacylglycerols;
(3) 1.5 or more and 2.8 or less as the ratio (mass ratio) [(SU) / (SS)] of the content of the monosaturated-monounsaturated diacylglycerol (SU) in the diacylglycerols relative to the content of the disaturated diacylglycerol (SS) in the diacylglycerols; and
(4) 0.17 or more and 3 or less as the mass ratio [(P) / (S)] of the content of the saturated fatty acid having 16 carbon atoms (P) relative to the content of the saturated fatty acid having 18 carbon atoms (S), in the constituent fatty acids of the diacylglycerols.

6. The method according to any one of claims 1 to 5, further satisfying the following (5):
(5) 20 to 65 mass% of a diunsaturated diacylglycerol (UU) in the diacylglycerols.

7. The method according to any one of claims 1 to 5, further satisfying the following (5):
(5) 25 to 65 mass% of a diunsaturated diacylglycerol (UU) in the diacylglycerols.

8. The method according to any one of claims 1 to 5, further satisfying the following (5):
(5) 30 mass% or more and 60 mass% or less of the diunsaturated diacylglycerol (UU) in the diacylglycerols.

9. The method according to any one of claims 1 to 5, further satisfying the following (5):
(5) 35 mass% or more and 55 mass% or less of the diunsaturated diacylglycerol (UU) in the diacylglycerols.

10. The method according to any one of claims 1 to 9, wherein the fat or oil composition further comprises from 1 to 49 mass% of triacylglycerols.

11. The method according to any one of claims 1 to 9, wherein a content of the diacylglycerols is 55 mass% or more and 95 mass% or less, and a content of the triacylglycerols is 5 mass% or more and 25 mass% or less.

12. The method according to any one of claims 1 to 9, wherein a content of the diacylglycerols is 70 mass% or more and 95 mass% or less, and a content of the triacylglycerols is 5 mass% or more and 25 mass% or less.

13. The method according to any one of claims 1 to 9, wherein a content of the diacylglycerols is 75 mass% or more and 95 mass% or less, and a content of the triacylglycerols is 5 mass% or more and 25 mass% or less.

14. The method according to any one of claims 1 to 13, wherein the water-in-oil emulsion has a mass ratio between an oil phase and an aqueous phase of from 10:90 to 90:10.

## Patentansprüche

1. Verfahren zur Herstellung von Buttercreme durch Hinzufügen von Zucker zu einer Wasser-in-Öl-Emulsion einer Fett- oder Ölzusammensetzung und Aufschäumen der resultierenden Mischung,
wobei die Fett- oder Ölzusammensetzung 50 Gew.% oder mehr Diacylglycerine umfasst, die die folgenden (1) bis (4) erfüllen:
(1) 10 bis 40 Gew.% der Diacylglycerine sind ein Diacylglycerin mit zwei gesättigten Fettsäuren (SS);
(2) 21 bis 45 Gew.% der Diacylglycerine sind ein Diacylglycerin mit einer gesättigten und einer ungesättigten Fettsäure (SU);
(3) ein Verhältnis (Massenverhältnis) [(SU) / (SS)] eines Gehalts des Diacylglycerins mit einer gesättigten und einer ungesättigten Fettsäure (SU) in den Diacylglycerinen bezogen auf einen Gehalt des Diacylglycerins mit zwei gesättigten Fettsäuren (SS) an den Diacylglycerinen beträgt 0,5 bis 3,8;
(4) ein Massenverhältnis [(P)/ (S)] eines Gehalts einer gesättigten Fettsäure mit 16 Kohlenstoffatomen (P) bezogen auf einen Gehalt einer gesättigten Fettsäure mit 18 Kohlenstoffatomen (S) in den Fettsäuren, die das Diacylglycerin aufbauen, beträgt 9,7 oder weniger.

2. Verfahren nach Anspruch 1, wobei die Diacylglycerine die folgenden (1) bis (4) erfüllen:
(1) 10 Gew.% oder mehr und 36 Gew.% oder weniger der Diacylglycerine sind ein Diacylglycerin mit zwei gesättigten Fettsäuren (SS);
(2) 21 Gew% oder mehr und 45 Gew.% oder weniger der Diacylglycerine sind ein Diacylglycerin mit einer gesättigten und einer ungesättigten Fettsäure (SU);
(3) ein Verhältnis (Massenverhältnis) [(SU) / (SS)] eines Gehalts des Diacylglycerins mit einer gesättigten und einer ungesättigten Fettsäure (SU) in den Diacylglycerinen bezogen auf einen Gehalt des Diacylglycerins mit zwei gesättigten Fettsäuren (SS) an den Diacylglycerinen beträgt 0,8 oder mehr und 3,7 oder weniger;
(4) ein Massenverhältnis [(P) / (S)] eines Gehalts einer gesättigten Fettsäure mit 16 Kohlenstoffatomen (P) bezogen auf einen Gehalt einer gesättigten Fettsäure mit 18 Kohlenstoffatomen (S) in den Fettsäuren, die das Diacylglycerin aufbauen, beträgt 0,15 oder mehr und 9,65 oder weniger.

3. Verfahren nach Anspruch 1, wobei die Diacylglycerine die folgenden (1) bis (4) erfüllen:
(1) 10 Gew.% oder mehr und 25 Gew.% oder weniger der Diacylglycerine sind ein Diacylglycerin mit zwei gesättigten Fettsäuren (SS);
(2) 25 Gew% oder mehr und 45 Gew.% oder weniger der Diacylglycerine sind ein Diacylglycerin mit einer gesättigten und einer ungesättigten Fettsäure (SU);
(3) ein Verhältnis (Massenverhältnis) [(SU) / (SS)] eines Gehalts des Diacylglycerins mit einer gesättigten und einer ungesättigten Fettsäure (SU) an den Diacylglycerinen bezogen auf einen Gehalt des Diacylglycerins mit zwei gesättigten Fettsäuren (SS) in den Diacylglycerinen beträgt 1,2 oder mehr und 3,5 oder weniger;
(4) ein Massenverhältnis [(P) / (S)] eines Gehalts einer gesättigten Fettsäure mit 16 Kohlenstoffatomen (P) bezogen auf einen Gehalt einer gesättigten Fettsäure mit 18 Kohlenstoffatomen (S) in den Fettsäuren, die das Diacylglycerin aufbauen, beträgt 0,16 oder mehr und 8,5 oder weniger.

4. Verfahren nach Anspruch 1, wobei die Diacylglycerine die folgenden (1) bis (4) erfüllen:
(1) 10 Gew.% oder mehr und 25 Gew.% oder weniger der Diacylglycerine sind ein Diacylglycerin mit zwei gesättigten Fettsäuren (SS);
(2) 25 Gew% oder mehr und 43 Gew.% oder weniger der Diacylglycerine sind ein Diacylglycerin mit einer gesättigten und einer ungesättigten Fettsäure (SU);
(3) ein Verhältnis (Massenverhältnis) [(SU) / (SS)] eines Gehalts des Diacylglycerins mit einer gesättigten und einer ungesättigten Fettsäure (SU) in den Diacylglycerinen bezogen auf einen Gehalt des Diacylglycerins mit zwei gesättigten Fettsäuren (SS) an den Diacylglycerinen beträgt 1,5 oder mehr und 3,4 oder weniger;
(4) ein Massenverhältnis [(P)/(S)] eines Gehalts einer gesättigten Fettsäure mit 16 Kohlenstoffatomen (P) bezogen auf einen Gehalt einer gesättigten Fettsäure mit 18 Kohlenstoffatomen (S) in den Fettsäuren, die das Diacylglycerin aufbauen, beträgt 0,16 oder mehr und 8 oder weniger.

5. Verfahren nach Anspruch 1, wobei die Diacylglycerine die folgenden (1) bis (4) erfüllen:
(1) 15 Gew.% oder mehr und 20 Gew.% oder weniger der Diacylglycerine sind ein Diacylglycerin mit zwei gesättigten Fettsäuren (SS);
(2) 27 Gew% oder mehr und 43 Gew.% oder weniger der Diacylglycerine sind ein Diacylglycerin mit einer gesättigten und einer ungesättigten Fettsäure (SU);
(3) ein Verhältnis (Massenverhältnis) [(SU) / (SS)] eines Gehalts des Diacylglycerins mit einer gesättigten und einer ungesättigten Fettsäure (SU) in den Diacylglycerinen bezogen auf einen Gehalt des Diacylglycerins mit zwei gesättigten Fettsäuren (SS) an den Diacylglycerinen beträgt 1,5 oder mehr und 2,8 oder weniger;
(4) ein Massenverhältnis [(P) / (S)] eines Gehalts einer gesättigten Fettsäure mit 16 Kohlenstoffatomen (P) bezogen auf einen Gehalt einer gesättigten Fettsäure mit 18 Kohlenstoffatomen (S) in den Fettsäuren, die das Diacylglycerin aufbauen, beträgt 0,17 oder mehr und 3 oder weniger.

6. Verfahren nach einem der Ansprüche 1 bis 5, wobei des Weiteren folgendes (5) erfüllt ist:
(5) 20 bis 65 Gew.% der Diacylglycerine sind ein Diacylglycerin mit zwei ungesättigten Fettsäuren (UU).

7. Verfahren nach einem der Ansprüche 1 bis 5, wobei des Weiteren folgendes (5) erfüllt ist:
(5) 25 bis 65 Gew.% der Diacylglycerine sind ein Diacylglycerin mit zwei ungesättigten Fettsäuren (UU).

8. Verfahren nach einem der Ansprüche 1 bis 5, wobei des Weiteren folgendes (5) erfüllt ist:
(5) 30 Gew.% oder mehr und 60 Gew.% oder weniger der Diacylglycerine sind ein Diacylglycerin mit zwei ungesättigten Fettsäuren (UU).

9. Verfahren nach einem der Ansprüche 1 bis 5, wobei des Weiteren folgendes (5) erfüllt ist:
(5) 35 Gew.% oder mehr und 55 Gew.% oder weniger der Diacylglycerine sind ein Diacylglycerin mit zwei ungesättigten Fettsäuren (UU).

10. Verfahren nach einem der Ansprüche 1 bis 9, wobei die Fett- oder Ölzusammensetzung des Weiteren von 1 bis 49 Gew.% Triacylglycerine umfasst.

11. Verfahren nach einem der Ansprüche 1 bis 9, wobei der Gehalt der Diacylglycerine 55 Gew.% oder mehr und 95 Gew.% oder weniger beträgt und der Gehalt der Triacylglycerine 5 Gew.% oder mehr und 25 Gew.% oder weniger beträgt.

12. Verfahren nach einem der Ansprüche 1 bis 9, wobei der Gehalt der Diacylglycerine 70 Gew.% oder mehr und
95 Gew.% oder weniger beträgt und der Gehalt der Triacylglycerine 5 Gew.% oder mehr und 25 Gew.% oder weniger beträgt.

13. Verfahren nach einem der Ansprüche 1 bis 9, wobei der Gehalt der Diacylglycerine 75 Gew.% oder mehr und
95 Gew.% oder weniger beträgt und der Gehalt der Triacylglycerine 5 Gew.% oder mehr und 25 Gew.% oder weniger beträgt.

14. Verfahren nach einem der Ansprüche 1 bis 13, wobei die Wasser-in-Öl-Emulsion ein Massenverhältnis zwischen einer Ölphase und einer wässrigen Phase von 10:90 bis 90:10 aufweist.

## Revendications

1. Procédé de préparation de crème au beurre par addition de sucre à une émulsion eau dans l'huile d'une composition de graisse ou d'huile et conversion en mousse du mélange résultant,
dans lequel la composition de graisse ou d'huile comprend 50 % en masse ou plus de diacylglycérols satisfaisant les éléments (1) à (4) suivants :
(1) 10 à 40 % en masse de diacylglycérol disaturé (SS) dans les diacylglycérols ;
(2) 21 à 45 % en masse de diacylglycérol monosaturé-mono-insaturé (SU) dans les diacylglycérols ;
(3) 0,5 à 3,8 de rapport (rapport en masse) [(SU) / (SS)] d'une teneur du diacylglycérol monosaturé-mono-insaturé (SU) dans les diacylglycérols par rapport à une teneur du diacylglycérol disaturé (SS) dans les diacylglycérols ; et
(4) 9,7 ou moins de rapport massique [(P)/(S)] d'une teneur d'un acide gras saturé comportant 16 atomes de carbone (P) par rapport à une teneur d'un acide gras saturé comportant 18 atomes de carbone (S), dans des acides gras constitutifs des diacylglycérols.

2. Procédé selon la revendication 1, dans lequel les diacylglycérols satisfont les éléments (1) à (4) suivants :
(1) 10% en masse ou plus et 36 % en masse ou moins d'un diacylglycérol disaturé (SS) dans les diacylglycérols ;
(2) 21% en masse ou plus et 45% en masse ou moins d'un diacylglycérol monosaturé-mono-insaturé (SU) dans les diacylglycérols ;
(3) 0,8 ou plus et 3,7 ou moins d'un rapport (rapport massique) [(SU)/(SS)] d'une teneur du diacylglycérol monosaturé-mono-insaturé (SU) dans les diacylglycérols par rapport à une teneur du diacylglycérol disaturé (SS) dans les diacylglycérols ; et
(4) 0,15 ou plus et 9,65 ou moins de rapport massique [(P)/(S)] d'une teneur d'un acide gras saturé comportant 16 atomes de carbone (P) par rapport à une teneur d'un acide gras saturé comportant 18 atomes de carbone (S), dans des acides gras constitutifs des diacylglycérols.

3. Procédé selon la revendication 1, dans lequel les diacylglycérols satisfont les éléments (1) à (4) suivants :
(1) 10% en masse ou plus et 25 % en masse ou moins d'un diacylglycérol disaturé (SS) dans les diacylglycérols ;
(2) 25% en masse ou plus et 45% en masse ou moins d'un diacylglycérol monosaturé-mono-insaturé (SU) dans les diacylglycérols ;
(3) 1,2 ou plus et 3,5 ou moins d'un rapport (rapport massique) [(SU)/(SS)] d'une teneur du diacylglycérol monosaturé-mono-insaturé (SU) dans les diacylglycérols par rapport à une teneur du diacylglycérol disaturé (SS) dans les diacylglycérols ; et
(4) 0,16 ou plus et 8,5 ou moins de rapport massique [(P)/(S)] d'une teneur d'un acide gras saturé comportant 16 atomes de carbone (P) par rapport à une teneur d'un acide gras saturé comportant 18 atomes de carbone (S), dans des acides gras constitutifs des diacylglycérols.

4. Procédé selon la revendication 1, dans lequel les diacylglycérols satisfont les éléments (1) à (4) suivants :
(1) 10% en masse ou plus et 25 % en masse ou moins du diacylglycérol disaturé (SS) dans les diacylglycérols ;
(2) 25% en masse ou plus et 43 % en masse ou moins du diacylglycérol monosaturé-mono-insaturé (SU) dans les diacylglycérols ;
(3) 1,5 ou plus et 3,4 ou moins de rapport (rapport massique) [(SU)/(SS)] de la teneur du diacylglycérol monosaturé-mono-insaturé (SU) dans les diacylglycérols par rapport à la teneur du diacylglycérol disaturé (SS) dans les diacylglycérols ; et
(4) 0,16 ou plus et 8 ou moins de rapport massique [(P)/(S)] d'une teneur d'un acide gras saturé comportant 16 atomes de carbone (P) par rapport à une teneur d'un acide gras saturé comportant 18 atomes de carbone (S), dans des acides gras constitutifs des diacylglycérols.

5. Procédé selon la revendication 1, dans lequel les diacylglycérols satisfont les éléments (1) à (4) suivants :
(1) 15% en masse ou plus et 20 % en masse ou moins du diacylglycérol disaturé (SS) dans les diacylglycérols ;
(2) 27% en masse ou plus et 43% en masse ou moins du diacylglycérol monosaturé-mono-insaturé (SU) dans les diacylglycérols ;
(3) 1,5 ou plus et 2,8 ou moins de rapport (rapport massique) [(SU)/(SS)] de la teneur du diacylglycérol monosaturé-mono-insaturé (SU) dans les diacylglycérols par rapport à la teneur du diacylglycérol disaturé (SS) dans les diacylglycérols ; et
(4) 0,17 ou plus et 3 ou moins de rapport massique [(P)/(S)] de la teneur de l'acide gras saturé comportant 16 atomes de carbone (P) par rapport à la teneur de l'acide gras saturé comportant 18 atomes de carbone (S), dans les acides gras constitutifs des diacylglycérols.

6. Procédé selon l'une quelconque des revendications 1 à 5, satisfait en outre l'élément (5) suivant :
(5) 20 à 65% en masse d'un diacylglycérol di-insaturé (UU) dans les diacylglycérols.

7. Procédé selon l'une quelconque des revendications 1 à 5, satisfaisant en outre l'élément (5) suivant :
(5) 25 à 65 % en masse d'un diacylglycérol di-insaturé (UU) dans les diacylglycérols.

8. Procédé selon l'une quelconque des revendications 1 à 5, satisfaisant en outre l'élément (5) suivant :
(5) 30% en masse ou plus et 60% en masse ou moins du diacylglycérol di-insaturé (UU) dans les diacylglycérols.

9. Procédé selon l'une quelconque des revendications 1 à 5, satisfaisant en outre l'élément (5) suivant :
(5) 35% en masse ou plus et 55% en masse ou moins du diacylglycérol di-insaturé (UU) dans les diacylglycérols.

10. Procédé selon l'une quelconque des revendications 1 à 9, dans lequel la composition de graisse ou d'huile comprend en outre de 1 à 49 % en masse de triacylglycérols.

11. Procédé selon l'une quelconque des revendications 1 à 9, dans lequel une teneur des diacylglycérols est de 55 % en masse ou plus et de 95 % en masse ou moins, et une teneur des triacylglycérols est de 5 % en masse ou plus et 25 % en masse ou moins.

12. Procédé selon l'une quelconque des revendications 1 à 9, dans lequel une teneur des diacylglycérols est de 70 % en masse ou plus et de 95 % en masse ou moins, et une teneur des triacylglycérols est de 5 % en masse ou plus et 25 % en masse ou moins.

13. Procédé selon l'une quelconque des revendications 1 à 9, dans lequel une teneur des diacylglycérols est de 75 % en masse ou plus et de 95 % en masse ou moins, et une teneur des triacylglycérols est de 5 % en masse ou plus et 25 % en masse ou moins.

14. Procédé selon l'une quelconque des revendications 1 à 13, dans lequel l'émulsion eau dans l'huile a un rapport massique entre phase huileuse et phase aqueuse de 10:90 à 90:10.
